# EUROPEAN PATENT APPLICATION

(11) **EP 4 539 280 A1**
(43) Date of publication of application: **16.04.2025**
(21) Application number: 22948530.5
(22) Date of filing: 30.06.2022
(51) Int. Cl.: H02G 11/00

(54) **SECURING APPARATUS, VEHICLE DOOR, VEHICLE AND DEVICE**

(71) Applicant: Shenzhen Yinwang Intelligent Technologies Co., Ltd., Shenzhen, Guangdong 518129 (CN)
(72) Inventor: KANG, Shaohai, Shenzhen, Guangdong 518129 (CN); SUN, Jian, Shenzhen, Guangdong 518129 (CN); WANG, Hongji, Shenzhen, Guangdong 518129 (CN); JIAO, Xueping, Shenzhen, Guangdong 518129 (CN); SHI, Hao, Shenzhen, Guangdong 518129 (CN)
(74) Representative: Pfenning, Meinig & Partner mbB
(86) International application number: PCT/CN2022/102883
(87) International publication number: WO 2024/000425

(57) **Abstract**

This application provides a fastening apparatus, a vehicle door, a vehicle, and a device, and relates to the mechanical field. The apparatus includes: a multi-stage telescopic member, where the multi-stage telescopic member includes a plurality of components that are slidably sleeved sequentially, a component located at the top is a top component, and the top component is configured to connect to a mobile apparatus, so that the multi-stage telescopic member is extended or retracted as the mobile apparatus moves; and at least one fastening point, where the at least one fastening point is disposed on the multi-stage telescopic member, the at least one fastening point is configured to fasten a harness, one end of the harness is configured to connect to the mobile apparatus, and the other end of the harness is configured to connect to a power supply apparatus, so that the power supply apparatus supplies power to the mobile apparatus through the harness. According to technical solutions of this application, durability of fastening the harness and the mobile apparatus can be improved, to avoid tangling between the harness and another element, and avoid abnormal sounds caused by repeated beating between the harness and another element. Embodiments provided in this application may be applied to an intelligent vehicle or a new energy vehicle.

## Description

### TECHNICAL FIELD

This application relates to the mechanical field, and specifically, to a fastening apparatus, a vehicle door, a vehicle, and a device.

### BACKGROUND

With development of science and technology, conventional objects such as a glass door and a glass window are also given more functions, for example, a light emitting and color changing function and a touch function. To implement the functions, glass needs to be continuously powered through a harness. However, in an application scenario like an intelligent vehicle, glass usually needs to perform a rising/falling action. In an entire rising/falling process, one end of a harness is connected to a glass component through a connecting member, and the harness is extended or retracted as the glass moves. In addition, in a process of extending or retracting the harness, the harness is tangled with another element that drives the glass to rise/fall, and in a process of rising/falling with the glass, the harness shakes and repeatedly beats with another element, resulting in abnormal sounds. In addition, the foregoing problems also exist in an application scenario of supplying power to a liftable screen of a device like a smart home device or a smartphone through the harness.

Therefore, in a process of supplying power to a mobile apparatus like the lifting glass or the lifting screen, how to improve durability of fastening the harness and the mobile apparatus, how to avoid tangling between the harness and the another element, and how to avoid the abnormal sounds caused by repeated beating between the harness and the another element are problems to be urgently resolved.

### SUMMARY

This application provides a fastening apparatus, a vehicle door, a vehicle, and a device, to fasten a harness to a multi-stage telescopic member through at least one fastening point, so that the at least one fastening point shares a bearing force on the harness. The multi-stage telescopic member is connected to a mobile apparatus, so that durability of fastening the harness and the mobile apparatus can be improved, tangling between the harness and another element can be avoided, and abnormal sounds caused by repeated beating between the harness and another element can be effectively avoided.

According to a first aspect, a fastening apparatus is provided, where the fastening apparatus includes: a multi-stage telescopic member, where the multi-stage telescopic member includes a plurality of components that are slidably sleeved sequentially, a component located at the top is a top component, and the top component is configured to connect to a mobile apparatus, so that the multi-stage telescopic member is extended or retracted as the mobile apparatus moves; and at least one fastening point, where the at least one fastening point is disposed on the multi-stage telescopic member, the at least one fastening point is configured to fasten a harness, one end of the harness is configured to connect to the mobile apparatus, and the other end of the harness is configured to connect to a power supply apparatus, so that the power supply apparatus supplies power to the mobile apparatus through the harness.

For example, the mobile apparatus is a power-consuming apparatus, and the power supply apparatus needs to be connected to the mobile apparatus through the harness, to continuously supply power to the mobile apparatus. In a process of movement of the mobile apparatus, the harness is also extended or retracted accordingly.

For example, the one end of the harness may be directly connected to the mobile apparatus, for example, connected to the mobile apparatus through a connecting member. The one end of the harness may alternatively include a lead head, and is connected to the mobile apparatus through the lead head. The harness or the lead head of the harness may be connected to the connecting member of the mobile apparatus. Further, the harness or the lead head of the harness may be in a sealed connection to the connecting member, so that durability of fastening the harness and the mobile apparatus is further improved. Similarly, the other end of the harness may be directly connected to the power supply apparatus. The other end of the harness may alternatively include a lead head, and is connected to the power supply apparatus through the lead head. Further, the other end of the harness or the lead head of the other end of the harness may be in a sealed connection to the power supply apparatus, so that the power supply apparatus supplies power to the mobile apparatus through the harness.

For example, when the multi-stage telescopic member is extended to be longest, the multi-stage telescopic member may be narrower at the bottom and wider at the top as a whole; or when the multi-stage telescopic member is extended to be longest, the multi-stage telescopic member may be narrower at the top and wider at the bottom as a whole.

For example, a component located at the bottom is a bottom component, and the bottom component and a support base may be fixedly connected, or may be not fixedly connected, that is, may be virtually connected.

For example, the harness may be fastened to the fastening point by using a fastener, or may be fastened by using a binding strap, or may be fastened in a welding or directly adhesive bonding manner.

Based on the foregoing technical solution, the fastening point bears a part of a weight of the harness, to prevent the connecting member between the harness and the mobile apparatus from bearing the weight of the entire harness, so as to improve durability of a connection between the harness and the mobile apparatus. In addition, the harness is fastened by using the fastening point, which constrains a movement range of the harness in a process in which the harness moves with the mobile apparatus.

With reference to the first aspect, in some implementations of the first aspect, a component located at the bottom is a bottom component, the bottom component is connected to a support base, and the fastening apparatus further includes: a rotating shaft, where the rotating shaft is disposed between the bottom component and the support base, so that the multi-stage telescopic member rotates along an axis of the rotating shaft.

For example, the rotating shaft may be a rotating rod, or may be a pivot rotating shaft.

Based on the foregoing technical solution, the rotating shaft is disposed between the multi-stage telescopic member and the support base, so that the multi-stage telescopic member can automatically adjust an angle of the multi-stage telescopic member in a process in which the mobile apparatus moves along a curve, to ensure that the mobile apparatus can normally move along a non-linear track, and avoid a case in which the mobile apparatus is stuck and the multi-stage telescopic member is even damaged when the mobile apparatus moves along the curve.

With reference to the first aspect, in some implementations of the first aspect, the fastening apparatus further includes an elastic connecting member, where the elastic connecting member is disposed between the top component and the mobile apparatus, so that the multi-stage telescopic member is capable of being pulled to be extended or retracted when the mobile apparatus moves.

For example, when the mobile apparatus moves along the curve, even if there is no rotating shaft to adjust the angle of the multi-stage telescopic member, because the connecting member between the top component and the mobile apparatus is elastic, a force that is of the mobile apparatus and that is in a direction of a tangent of a curve movement track can be decomposed into a force and a force in a direction parallel to a direction of the multi-stage telescopic member, so that the multi-stage telescopic member can still be pulled to be extended or retracted.

Based on the foregoing technical solution, the top component of the multi-stage telescopic apparatus is connected to the mobile apparatus through the elastic connecting member, so that in a process in which the mobile apparatus moves along the curve, through the elastic connecting member, the force in the direction parallel to the direction of the multi-stage telescopic member can be obtained through decomposing, and the multi-stage telescopic member can still be pulled to be extended or retracted, to ensure that the mobile apparatus can normally move along the curve, and avoid a case in which the mobile apparatus is stuck and the multi-stage telescopic member is even damaged when the mobile apparatus moves along the non-linear track.

With reference to the first aspect, in some implementations of the first aspect, a quantity of the at least one fastening point is the same as a quantity of the components included in the multi-stage telescopic member, and one fastening point is disposed on each stage of component.

Based on the foregoing technical solution, the fastening points of all stages of components jointly bear the weight of the entire harness. This further improves the durability of a connection between the harness and the mobile apparatus. In addition, the harness is fastened by using the plurality of fastening points, which also constrains the movement range of the harness in the process in which the harness moves with the mobile apparatus.

With reference to the first aspect, in some implementations of the first aspect, the component is of a hollow structure, and is configured to accommodate the harness.

Based on the foregoing technical solution, the multi-stage telescopic member is of a hollow structure and is configured to accommodate the harness, which further constrains the movement range of the harness. This effectively avoids tangling between the harness and another element, and also avoids an abnormal sound caused by beating between the harness and another element.

With reference to the first aspect, in some implementations of the first aspect, the fastening apparatus further includes: a first hole, where the first hole is provided on the top component, and is configured to lead out the one end of the harness; and a second hole, where the second hole is provided on the bottom component, and is configured to lead out the other end of the harness.

Based on the foregoing technical solution, closed space is provided for the harness, and is used to accommodate the harness, and the first hole and the second hole are provided on the multi-stage telescopic member, so that the harness is connected to the mobile apparatus and the power supply apparatus separately, to continuously supply power to the mobile apparatus.

With reference to the first aspect, in some implementations of the first aspect, the at least one fastening point includes a first fastening point and a second fastening point, the first fastening point is disposed on the top component, the second fastening point is disposed on the bottom component, and when the multi-stage telescopic member is retracted to be shortest, the harness between the first fastening point and the second fastening point is distributed in a U shape.

Based on this technical solution, there is no harness stacked together in the bottom component, so that a case in which the harness is tangled by itself can be effectively prevented.

With reference to the first aspect, in some implementations of the first aspect, the harness is a drag chain harness.

Based on the foregoing technical solution, the drag chain harness has characteristics of good stability and high durability. A weight of the drag chain may also play a corresponding constraint role on the harness, so that the harness is not likely to be tangled by itself.

With reference to the first aspect, in some implementations of the first aspect, a first opening is provided on a surface of the component.

For example, the surface of the component may be a large surface of the component, and the large surface is a surface with a largest area in surfaces of the component, or may be another surface. Due to a constraint function of the drag chain harness, generally, even if the first opening is provided on the surface of the component, the drag chain harness does not overflow from the first opening in a process of extending or retracting the drag chain harness.

Based on the foregoing technical solution, because the drag chain harness has a characteristic of constraining the harness, the drag chain harness is not likely to be tangled with another element due to overflowing from the first opening on the surface of the component. Further, the multi-stage telescopic member is lightweight to some extent, so that the fastening apparatus is lighter, and manufacturing costs are reduced.

With reference to the first aspect, in some implementations of the first aspect, the component is a baffle plate, and the fastening apparatus further includes: an accommodation portion, where one side of the accommodation portion has a second opening, the second opening is disposed opposite to the multi-stage telescopic member, and when the multi-stage telescopic member is extended to be longest, a range of the second opening covers all the at least one fastening point disposed on the multi-stage telescopic member.

For example, the accommodation portion may be of a box-type structure, for example, may be a harness box having the second opening on the one side.

For example, the one side having the second opening may be a large surface of the accommodation portion, or may be a side surface of the accommodation portion. The side surface is a surface that is connected to the large surface and that is other than an upper end surface or a lower end surface of the accommodation portion.

Based on the foregoing technical solution, the accommodation portion is configured to accommodate the harness fastened to the multi-stage telescopic member, to further limit the movement range of the harness when the harness moves with the mobile apparatus. This can effectively avoid tangling between the harness and another element, and also avoid an abnormal sound caused by beating between the harness and another element.

With reference to the first aspect, in some implementations of the first aspect, a lower end of the second opening is connected to the bottom component, and the fastening apparatus further includes: a third hole, where the third hole is provided at an upper end of the accommodation portion or the top component, and is configured to lead out the one end of the harness; and a fourth hole, where the fourth hole is provided at a lower end of the accommodation portion or the bottom component, and is configured to lead out the other end of the harness.

Based on the foregoing technical solution, closed space is provided for the harness, and is used to accommodate the harness, and the third hole and the fourth hole are provided on the multi-stage telescopic member or the accommodation portion, so that the harness is connected to the mobile apparatus and the power supply apparatus separately, to continuously supply power to the mobile apparatus.

With reference to the first aspect, in some implementations of the first aspect, the fastening apparatus further includes a pressure plate, where the pressure plate is disposed on the top component and extends to an inside of the accommodation portion, to prevent the harness from overflowing from the second opening in a process of retracting the multi-stage telescopic member.

For example, when a fastening point is disposed on the top component, the pressure plate may be disposed above the fastening point of the top component. The pressure plate may alternatively be directly disposed on the upper end surface of the top component. For example, when no fastening point is disposed on the top component, and a fastening point is disposed on a lower stage of component of the top component, the pressure plate may be disposed on the top component, or the pressure plate may be disposed above a fastening point of the lower stage of component.

Based on the foregoing technical solution, a phenomenon in which the harness disorders in the accommodation portion and overflows from the accommodation portion in the retraction process, resulting in tangling between the harness and another element can be effectively prevented.

With reference to the first aspect, in some implementations of the first aspect, the accommodation portion and a slide rail of the mobile apparatus are integrally formed.

Based on the foregoing technical solution, the accommodation portion is used as a part of the slide rail, and space occupied by the apparatus is saved.

With reference to the first aspect, in some implementations of the first aspect, the harness is a flat harness.

Based on the foregoing technical solution, because the flat harness is likely to bend, and is likely to be in a form of stacking with each other after being bent. Therefore, the flat harness is used, to effectively avoid a problem that the harness is tangled by itself in the process of moving with the mobile apparatus, and can also avoid a problem that the harness is tangled with another element.

According to a second aspect, a vehicle door is provided, where the vehicle door includes the fastening apparatus and the mobile apparatus according to any one of the possible implementations of the first aspect.

With reference to the second aspect, in some implementations of the second aspect, the mobile apparatus included in the vehicle door is liftable vehicle door glass, and the liftable vehicle door glass is connected to the fastening apparatus.

With reference to the second aspect, in some implementations of the second aspect, the liftable vehicle door glass is connected to the fastening apparatus through an elastic connecting member.

According to a third aspect, a vehicle is provided, where the vehicle includes the fastening apparatus according to any one of the possible implementations of the first aspect, or the vehicle door according to any one of the possible implementations of the second aspect.

According to a fourth aspect, a device is provided, where the device includes the fastening apparatus according to any one of the possible implementations of the first aspect.

For example, the device may be a display, a television, a curtain, building glass, a roof skylight, or the like.

### BRIEF DESCRIPTION OF DRAWINGS

FIG. 1 is a diagram of continuously supplying power to a mobile apparatus 110 according to an embodiment of this application;
FIG. 2(a) to FIG. 2(c) are diagrams of a structure of a fastening apparatus 200 according to an embodiment of this application;
FIG. 3 is a diagram of a structure of another fastening apparatus 200 according to an embodiment of this application;
FIG. 4 is a diagram of a structure of another fastening apparatus 200 according to an embodiment of this application;
FIG. 5 is a diagram of a structure of another fastening apparatus 200 according to an embodiment of this application;
FIG. 6 is a diagram of a structure of another fastening apparatus 200 according to an embodiment of this application;
FIG. 7 is a diagram of a structure of another fastening apparatus 200 according to an embodiment of this application;
FIG. 8 is a diagram of a structure of another fastening apparatus 200 according to an embodiment of this application;
FIG. 9 is a diagram of a structure of another fastening apparatus 200 according to an embodiment of this application;
FIG. 10(a) to FIG. 10(e) are diagrams of a structure of another fastening apparatus 200 according to an embodiment of this application; and
FIG. 11(a) to FIG. 11(h) are diagrams of a structure of another fastening apparatus 200 according to an embodiment of this application.

### DESCRIPTION OF EMBODIMENTS

The following describes technical solutions of this application with reference to the accompanying drawings.

A fastening apparatus 200 provided in this application is applicable to a vehicle, and is used together with lifting glass of the vehicle. The vehicle (sometimes referred to as a car for short) in this application is a vehicle in a generalized concept, and may be a transportation means (for example, an automobile, a truck, a motorcycle, a train, an airplane, or a ship), an industrial vehicle (for example, a fork lift truck, a trailer, or a tractor), an engineering vehicle (for example, an excavator, a bulldozer, or a crane), an agricultural device (for example, a lawn mower, or a harvester), a recreation device, or a toy vehicle. A type of the vehicle is not limited in this application. In addition, the fastening apparatus 200 provided in this application is further applicable to a scenario in which the fastening apparatus 200 is extended or retracted as another power supply object moves.

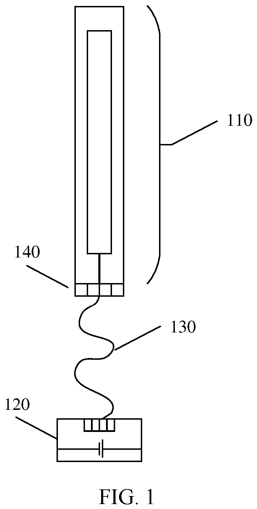

For example, in a scenario in which vehicle door glass of the vehicle is powered, to implement functions such as electrochromism and touch of the vehicle door glass, the vehicle door glass needs to be continuously powered. FIG. 1 is a diagram of continuously supplying power to a mobile apparatus 110 according to an embodiment of this application. Generally, a power supply apparatus 120 of the vehicle is connected to the mobile apparatus 110 through a harness 130. The power supply apparatus 120 may be a battery of the vehicle, or may be a battery apparatus that is separately configured to supply power to the mobile apparatus 110. This is not limited in embodiments of this application. The mobile apparatus 110 may be the vehicle door glass of the vehicle. Further, the harness 130 may be connected to the mobile apparatus 110 through a connecting member 140. When the mobile apparatus 110 rises, the harness 130 is extended as the mobile apparatus 110 rises, and when the mobile apparatus 110 falls, the harness 130 is retracted as the mobile apparatus 110 falls. However, in a rising/falling process of the mobile apparatus 110, there are the following problems.

(1) Tangling problem: After the mobile apparatus 110 falls, in a process of retracting the harness 130, a bent part of the harness 130 and an accessory of a vehicle door sheet metal, for example, a glass lifting slide rail and a door reinforcing beam, are tangled, causing the harness 130 to be bound. Then, if the mobile apparatus 110 rises, the harness 130 may be broken.

(2) Durability problem: In the rising/falling process of the mobile apparatus 110, the connecting member 140 between the harness 130 and the mobile apparatus 110 needs to bear a weight of the harness 130, and especially when the mobile apparatus 110 rises to a limit, this fastening point may need to bear the weight of the entire harness 130. Therefore, in a process of repeated rising and falling of the vehicle door glass, durability of a connection between the harness 130 and the connecting member 140 cannot be ensured.

(3) Problem of controlling an abnormal sound caused when the harness 130 is suspended and shakes: In the rising/falling process of the mobile apparatus 110, the harness 130 shakes and repeatedly beats with a peripheral component of the harness 130, resulting in abnormal sounds.

The foregoing uses the scenario in which the vehicle door glass of the vehicle is powered as an example, to describe current problems in the scenario. Similarly, in another application scenario in which the mobile apparatus 110 needs to be continuously powered through the harness 130, for example, a scenario of rising/falling of a mechanical arm, the problems also exist. However, all existing technical solutions have defects such as complex processes, difficult mass production, and poor durability. In view of this, this application provides a fastening apparatus 200. By using a multi-stage telescopic member 210, a problem of tangling between a harness 130 and another element is avoided in a process in which the harness 130 moves with a mobile apparatus 110, and a plurality of fastening points for fastening the harness 130 are disposed on the multi-stage telescopic member 210, to share a bearing force on the harness 130. This improves durability of a connection between the harness 130 and the mobile apparatus 110. In addition, the apparatus 200 for constraining the harness 130 may further effectively avoid abnormal sounds caused by repeated beating between the harness 130 and another element.

In an embodiment of this application, an application scenario in which the mobile apparatus 110 is continuously powered through the harness 130 is used to describe the apparatus 200 for constraining the harness 130 provided in embodiments of this application.

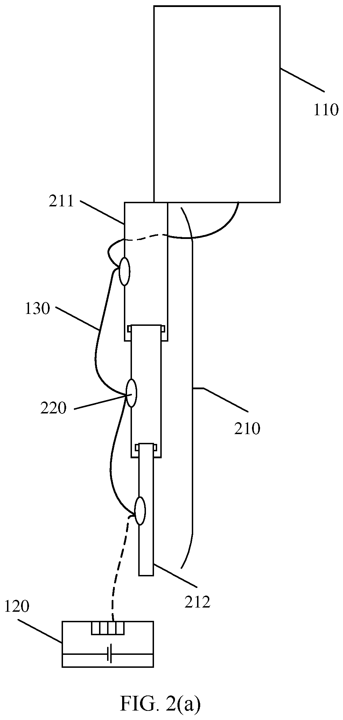

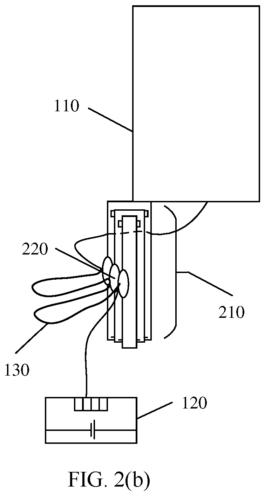

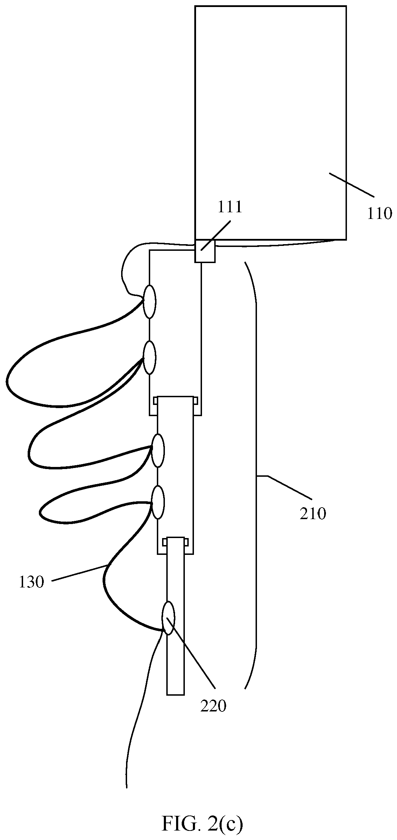

FIG. 2(a) to FIG. 2(c) are diagrams of a structure of a fastening apparatus 200 according to an embodiment of this application. FIG. 2(a) to FIG. 2(c) are side cross-sectional views of the fastening apparatus 200. FIG. 2(a) is a diagram of a structure obtained when the fastening apparatus 200 is extended to be longest as a mobile apparatus 110 moves. FIG. 2(b) is a diagram of a structure obtained when the fastening apparatus 200 is retracted to be shortest as the mobile apparatus 110 moves. FIG. 2(c) is a diagram of disposing a fastening point when a harness 130 is excessively long.

The apparatus 200 includes:
a multi-stage telescopic member 210, where the multi-stage telescopic member 210 includes a plurality of components that are slidably sleeved sequentially, a component located at the top is a top component 211, and the top component 211 is configured to connect to the mobile apparatus 110, so that the multi-stage telescopic member 210 is extended or retracted as the mobile apparatus 110 moves; and
at least one fastening point 220, where the at least one fastening point 220 is disposed on the multi-stage telescopic member 210, the at least one fastening point 220 is configured to fasten the harness 130, one end of the harness 130 is configured to connect to the mobile apparatus 110, and the other end of the harness 130 is configured to connect to a power supply apparatus 120, so that the power supply apparatus 120 supplies power to the mobile apparatus 110 through the harness 130.

The top component 211 is a component that is located at the top of the entire multi-stage telescopic member 210 when the multi-stage telescopic member 210 is extended to be longest along a direction perpendicular to the ground.

In an embodiment, the mobile apparatus 110 is a power-consuming apparatus, and the power supply apparatus 120 needs to be connected to the mobile apparatus through the harness 130, to continuously supply power to the mobile apparatus 110. In a process of movement of the mobile apparatus 110, the harness 130 is also extended or retracted accordingly.

In some possible embodiments, the one end of the harness 130 may be directly connected to the mobile apparatus 110, for example, connected to the mobile apparatus 110 through a connecting member. The one end of the harness 130 may alternatively include a lead head, and is connected to the mobile apparatus 110 through the lead head. The harness 130 or the lead head of the harness 130 may be connected to the connecting member 140 of the mobile apparatus 110. Further, the harness 130 or the lead head of the harness 130 may be in a sealed connection to the connecting member 140, so that durability of a connection between the harness 130 and the mobile apparatus 110 is further improved. Similarly, the other end of the harness 130 may be directly connected to the power supply apparatus 120. The other end of the harness 130 may alternatively include a lead head, and is connected to the power supply apparatus 120 through the lead head. Further, the other end of the harness 130 or the lead head of the other end of the harness 130 may be in a sealed connection to the power supply apparatus 120, so that the power supply apparatus 120 supplies power to the mobile apparatus 110 through the harness 130.

In some possible embodiments, the multi-stage telescopic member 210 includes N stages of components that are slidably sleeved sequentially. A width of an i^{th} stage of component is greater than a width of an (i-1)^{th} stage of component, that is, when the multi-stage telescopic member 210 is extended to be longest, the multi-stage telescopic member 210 is narrower at the bottom and wider at the top as a whole. The width of the i^{th} stage of component of the multi-stage telescopic member 210 may alternatively be less than the width of the (i-1)^{th} stage of component, that is, when the multi-stage telescopic member 210 is extended to be longest, the multi-stage telescopic member 210 is narrower at the top and wider at the bottom as a whole. This is not limited in embodiments of this application. Herein, i is a positive integer greater than 1 and less than or equal to N.

For ease of description, the following uses an example in which the mobile apparatus 110 is lifting glass of a vehicle door for description. A bottom component 212 of the fastening apparatus 200 may be connected to a support base, and the support base may be a vehicle door sheet metal.

As shown in FIG. 2(a), in an embodiment, the multi-stage telescopic member 210 includes the N components that are slidably sleeved sequentially, where N is a positive integer greater than 1. In a process in which the lifting glass rises, because a top end of an N^{th} stage of component of the multi-stage telescopic member 210 is connected to the lifting glass, the N^{th} stage of component is first pulled up by the lifting glass. When the N^{th} stage of component is pulled up to be highest, because the components are slidably sleeved sequentially, the N^{th} stage of component pulls up an (N-1)^{th} stage of component, so that the entire multi-stage telescopic member 210 continues to be extended. A similar process is performed until the lifting glass rises to be highest. In this case, the multi-stage telescopic member 210 may be extended to be longest. The N^{th} stage of component is the top component 211. The top component 211 may be directly connected to the lifting glass, or may be connected to a slider 111 of the lifting glass shown in FIG. 2(c). The slider is disposed on a glass slide rail and is fastened to the glass, to drive the glass to rise/fall. Certainly, the top component 211 may be specifically connected to the lifting glass through bonding, or may be connected to the lifting glass through another connecting member, provided that the top component 211 is connected to the lifting glass. This is not limited in embodiments of this application.

On the contrary, as shown in FIG. 2(b), in a process in which the lifting glass falls, a 2^{nd} stage of component to the N^{th} stage of component fall as a whole with the lifting glass. When the 2^{nd} stage of component first falls to be lowest, because the components are slidably sleeved sequentially, a 3^{rd} stage of component to the N^{th} stage component continue to fall as a whole with the lifting glass. A similar process is performed until the lifting glass falls to be lowest. In this case, the multi-stage telescopic member 210 may be retracted to be shortest, and each stage of component of the multi-stage telescopic member 210 is accommodated by an upper stage or a lower stage of component. Because the bottom component 212 is fixedly connected to the vehicle door sheet metal, the bottom component 212 is not pulled up in the rising/falling process of the lifting glass.

In the foregoing embodiment, the bottom component 212 and the vehicle door sheet metal are fixedly connected. In some other possible embodiments, the bottom component 212 and the vehicle door sheet metal may be not fixedly connected, that is, may be virtually connected. This is also applicable to the foregoing technical solution. Similarly, the bottom component 212 is not necessarily fixedly connected to the vehicle door sheet metal. Alternatively, a stage of component other than the top component 211 may be fixedly connected to the vehicle door sheet metal. This is not limited in embodiments of this application.

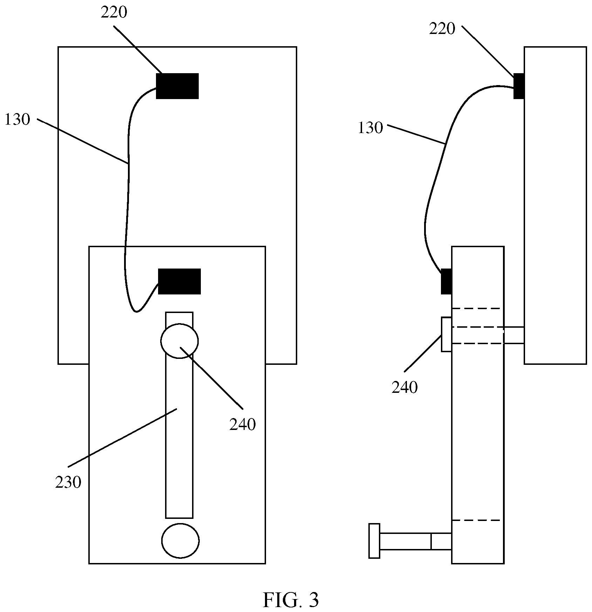

In some possible embodiments, in a process in which the lifting glass continuously rises, when the i^{th} stage of component is pulled up to be highest, the (i-1)^{th} stage of component needs to be pulled up through the connecting member. The connecting member may be shown in FIG. 3. FIG. 3 is a diagram of a structure of another fastening apparatus 200 according to an embodiment of this application. FIG. 3 is a front view of the fastening apparatus 200.

In an example shown in FIG. 3, i is equal to N, and the connecting member includes a slide rail 230 and a fastening button 240, where the fastening button 240 may be disposed at a lower end of the i^{th} stage of component, and the slide rail 230 may be disposed on the (i-1)^{th} stage of component. The slide rail 230 is a linear slide rail and is parallel to an extended/retracted direction of the multi-stage telescopic member 210. The slide rail 230 may extend from an upper end to a lower end of the (i-1)^{th} stage of component, or from an upper end to a middle portion of the (i-1)^{th} stage of component. A projection that is of the fastening button 240 and that is on the (i-1)^{th} stage of component is in a straight line with the slide rail.

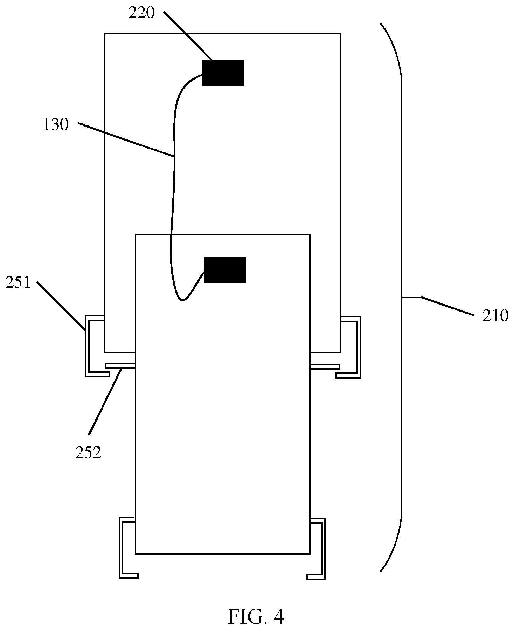

In addition, the connecting member may be shown in FIG. 4. FIG. 4 is a diagram of a structure of another fastening apparatus 200 according to an embodiment of this application. FIG. 4 is a front view of the fastening apparatus 200.

In an example shown in FIG. 4, i is equal to N, and this connection structure includes a first lapping member 251 and a second lapping member 252, where the first lapping member 251 is disposed at the lower end of the i^{th} stage of component, and the second lapping member 252 is disposed at the upper end of the (i-1)^{th} stage of component. In addition, the connection structure provided in this application may be in another form. This is not limited in this application.

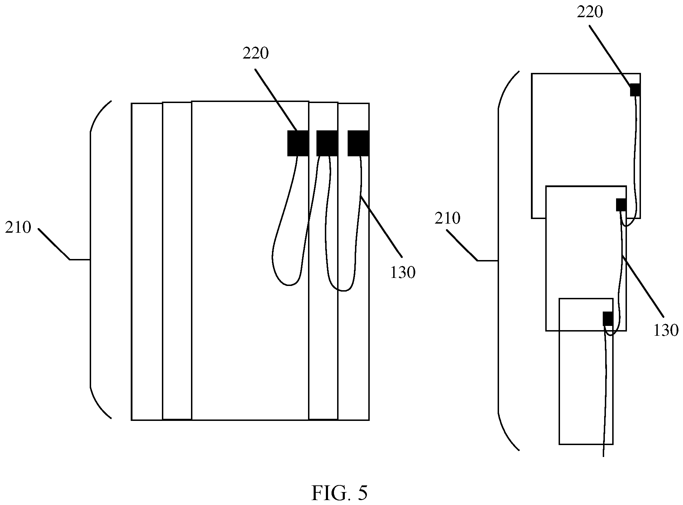

In some possible embodiments, the connecting member between the i^{th} stage of component and the (i-1)^{th} stage of component may be disposed below a fastening point of the (i-1)^{th} stage of component. In this way, when the multi-stage telescopic member 210 is retracted to be shortest, the harness 130 is not clamped in an interlayer between the components. Alternatively, FIG. 5 is a diagram of a structure of another fastening apparatus 200 according to an embodiment of this application. FIG. 5 is a front view of the fastening apparatus 200. The fastening point is disposed in an edge area of a side of each stage of component, and the edge area is not an overlapping area that is of components and that occurs in a state in which each stage of component is accommodated by an upper stage of component or a lower stage of component. This structure can also prevent the harness 130 from being clamped in an interlayer between the components.

In some possible embodiments, the harness 130 may be fastened to the fastening point by using a fastener, or the harness 130 may be fastened by using a binding strap, or the harness 130 may be fastened in a welding or direct adhesive bonding manner. A specific manner of fastening the harness 130 to the fastening point is not limited in embodiments of this application.

Based on the foregoing technical solution, the apparatus provided in this embodiment of this application includes the fastening point, and the fastening point can bear a part of a weight of the harness 130, to prevent the connecting member between the harness 130 and the door lifting glass from bearing the weight of the entire harness 130. This improves durability of a connection between a lead of the harness 130 and the mobile apparatus 110. In addition, the harness 130 is fastened by using the fastening point, which constrains a movement range of the harness 130 in a process in which the harness 130 moves with the mobile apparatus 110.

In some possible embodiments, each stage of component in the multi-stage telescopic member 210 is provided with one fastening point described above. In addition, as shown in FIG. 2(c), when the harness 130 is excessively long, a plurality of fastening points described above may further be disposed on a stage of component, and the harness 130 is bent to a proper length by using the fastening points.

In some possible embodiments, in a process in which the multi-stage telescopic member 210 is extended to be longest, the harness 130 between the fastening points is always in a loose state.

Based on the foregoing technical solution, the fastening points of all stages of components jointly bear the weight of the entire harness 130. This further improves the durability of a connection between the harness 130 and the mobile apparatus 110. In addition, the harness 130 is fastened by using the plurality of fastening points, which also constrains the movement range of the harness 130 in the process in which the harness 130 moves with the mobile apparatus 110.

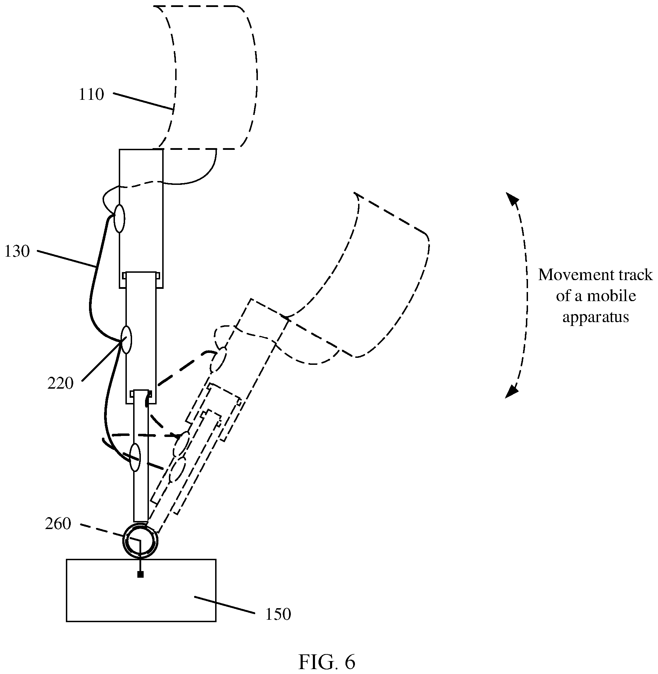

FIG. 6 is a diagram of a structure of a fastening apparatus 200 according to an embodiment of this application.

The apparatus further includes:
a rotating shaft 260, where the rotating shaft 260 is disposed between an outer surface of the bottom component 212 and a support base 150, to connect the bottom component 212 and the support base 150, and enable the multi-stage telescopic member 210 to rotate along an axis of the rotating shaft 260.

Similar to the top component 211 located at the top, a component located at the bottom is a component located at the bottom of the entire multi-stage telescopic member 210 when the multi-stage telescopic member 210 is extended to be longest along the direction perpendicular to the ground.

For example, the mobile apparatus 110 is the vehicle door lifting glass. Because housings of most vehicles are set to a streamlined shape, a rising/falling track of the vehicle door lifting glass is a curve. If the multi-stage telescopic member 210 is directly and fixedly connected to the vehicle door sheet metal, it cannot be ensured that the multi-stage telescopic member 210 can rise and fall with the lifting glass. Consequently, the glass is stuck and the multi-stage telescopic member 210 is even damaged in the rising/falling process.

Therefore, the outer surface of the bottom component 212 is connected to the vehicle door sheet metal through the rotating shaft 260. The rotating shaft 260 may be a rotating rod, or may be a pivot rotating shaft. This is not limited in embodiments of this application.

When the lifting glass rises along the curve, while driving the N^{th} stage of component to rise, the lifting glass also drives the rotating shaft 260 to rotate along the shaft axis, to adjust an angle of the multi-stage telescopic member 210, so as to ensure effective rising/falling movement along the curve in the rising/falling process of the glass.

In some possible embodiments, when the mobile apparatus 110 is a power-consuming apparatus other than the lifting glass, the mobile apparatus 110 may move along an irregular track. The technical solution provided in the foregoing embodiment is also applicable to this case.

Based on the foregoing technical solution, the rotating shaft 260 is disposed between the multi-stage telescopic member 210 and the support base 150, to ensure that the multi-stage telescopic member 210 can automatically adjust the angle of the multi-stage telescopic member 210 in a process in which the mobile apparatus 110 moves along a non-linear track, so as to ensure that the mobile apparatus 110 can normally move along the non-linear track, and avoid a case in which the mobile apparatus 110 is stuck and the multi-stage telescopic member 210 is even damaged when the mobile apparatus 110 moves along the curve.

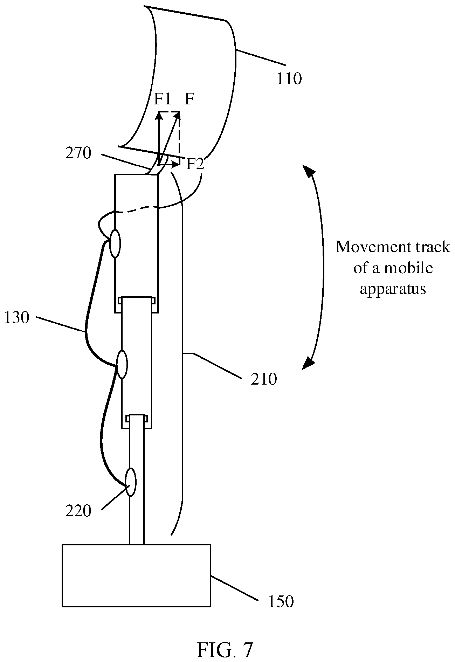

FIG. 7 is a diagram of a structure of another fastening apparatus 200 according to an embodiment of this application.

The fastening apparatus 200 may further include:
an elastic connecting member 270, where the elastic connecting member 270 is disposed between the top component 211 and the mobile apparatus 110, so that the multi-stage telescopic member 210 is still capable of being pulled to be extended or retracted when the mobile apparatus 110 moves along the curve. This embodiment is applicable to a case in which no rotating shaft 260 is disposed between the bottom component 212 of the multi-stage telescopic member 210 and the support base 150.

When the mobile apparatus 110 moves along the curve, even if there is no rotating shaft 260 to adjust the angle of the multi-stage telescopic member 210, because the connecting member between the top component 211 and the mobile apparatus 110 is elastic, a force F that is of the mobile apparatus 110 and that is in a direction of a tangent of a curve movement track can be decomposed into a force and a force F1 in a direction parallel to a direction of the multi-stage telescopic member 210, so that the multi-stage telescopic member 210 can still be pulled by the mobile apparatus 110 to be extended or retracted.

In some possible embodiments, when the mobile apparatus 110 is a power-consuming apparatus other than the lifting glass, the mobile apparatus 110 may move along an irregular track. The technical solution provided in the foregoing embodiment is also applicable to this case. Certainly, the technical solution provided in this embodiment is also applicable to a case in which the rotating shaft 260 is disposed between the bottom component 212 and the support base 150.

Based on the foregoing technical solution, the top component 211 of the multi-stage telescopic apparatus is connected to the mobile apparatus 110 through the elastic connecting member 270, to ensure that in a process in which the mobile apparatus 110 moves along the non-linear track, through the elastic connecting member 270, the force F1 in the direction parallel to the direction of the multi-stage telescopic member 210 can be obtained through decomposing, so that the multi-stage telescopic member 210 can still be pulled to be extended or retracted, so as to ensure that the mobile apparatus 110 can normally move along the non-linear track, and avoid a case in which the mobile apparatus 110 is stuck and the multi-stage telescopic member 210 is even damaged when the mobile apparatus 110 moves along the non-linear track.

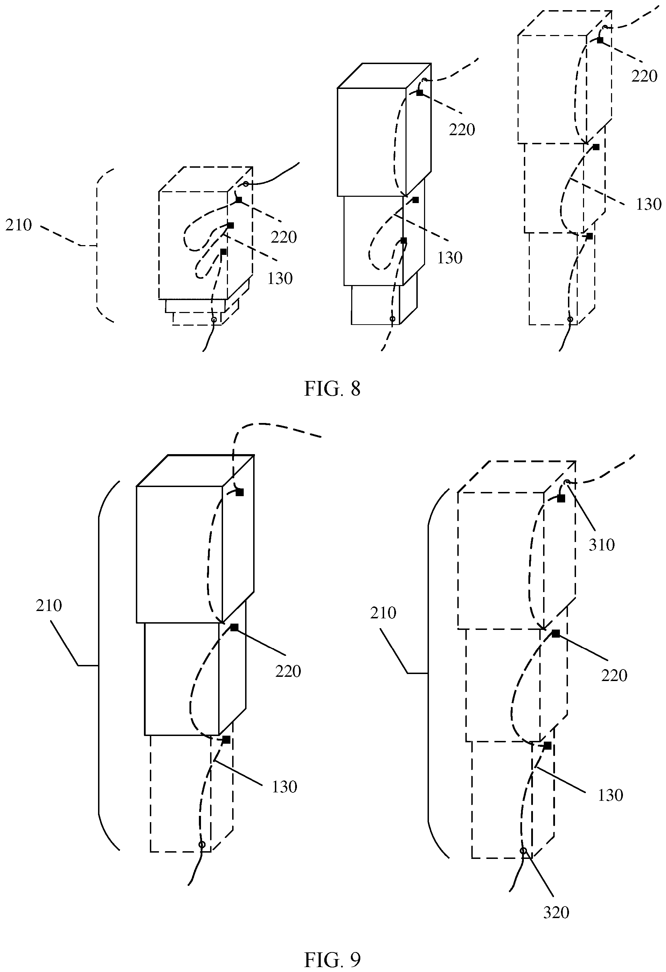

FIG. 8 is a diagram of a structure of another fastening apparatus 200 according to an embodiment of this application. In this embodiment, each stage of component of the multi-stage telescopic member 210 included in the fastening apparatus 200 is of a hollow structure. For example, the hollow structure may be a structure in a form of harness box, and is configured to accommodate the harness 130.

In some possible embodiments, when the multi-stage telescopic member 210 includes two components that are slidably sleeved sequentially, because the top component 211 and the bottom component 212 are slidably sleeved, a lower end surface of the top component 211 and an upper end surface of the bottom component 212 are both non-closed, so that the harness 130 can be disposed through all the stages of components of the multi-stage telescopic member 210. FIG. 9 is a diagram of a structure of another fastening apparatus 200 according to an embodiment of this application. An upper end surface of the top component 211 may alternatively be non-closed, so that one end of the harness 130 is led out, and the one end of the harness 130 is connected to the mobile apparatus 110. Certainly, the upper end surface of the top component 211 may alternatively be closed, and a first hole 310 needs to be provided, so that the one end of the harness 130 is led out, and the one end of the harness 130 is connected to the mobile apparatus 110, to better accommodate the harness 130. Because the bottom component 212 is in contact with the support base 150, regardless of whether a lower end surface of the bottom component 212 is closed, the harness 130 does not fall off from the multi-stage telescopic member 210 in a retraction process. Therefore, a second hole 320 needs to be provided on the bottom component 212, to lead out the other end of the harness 130, so that the other end of the harness 130 is connected to the power supply apparatus 120, to continuously supply power to the mobile apparatus 110.

When the multi-stage telescopic member 210 includes more than two components that are slidably sleeved sequentially, for ease of description, in this embodiment of this application, components other than the top component 211 and the bottom component 212 of the multi-stage telescopic member 210 are collectively referred to as middle components. Because the multi-stage telescopic member 210 includes the plurality of components that are slidably sleeved sequentially, upper end surfaces and lower end surfaces of the middle components are non-closed, so that the harness 130 can be disposed through all the stages of components of the entire multi-stage telescopic member 210. The upper end surface of the top component 211 may alternatively be non-closed, so that the one end of the harness 130 is led out, and the one end of the harness 130 is connected to the mobile apparatus 110. Certainly, and the upper end surface of the top component 211 may alternatively be closed, and the first hole 310 needs to be provided, to lead out the one end of the harness 130, so that the end of the harness 130 is connected to the mobile apparatus 110. Because the bottom component 212 is in contact with the support base 150, regardless of whether the lower end surface of the bottom component 212 is closed, the harness 130 does not fall off from the multi-stage telescopic member 210 in the retraction process. Therefore, the second hole 320 needs to be provided on the bottom component 212, to lead out the other end of the harness 130, so that the other end of the harness 130 is connected to the power supply apparatus 120, to continuously supply power to the mobile apparatus 110.

Based on the foregoing technical solution, the multi-stage telescopic member 210 is of a hollow structure and is configured to accommodate the harness 130, which further constrains the movement range of the harness 130. This effectively avoids tangling between the harness 130 and another element, and also avoids an abnormal sound caused by beating between the harness 130 and another element.

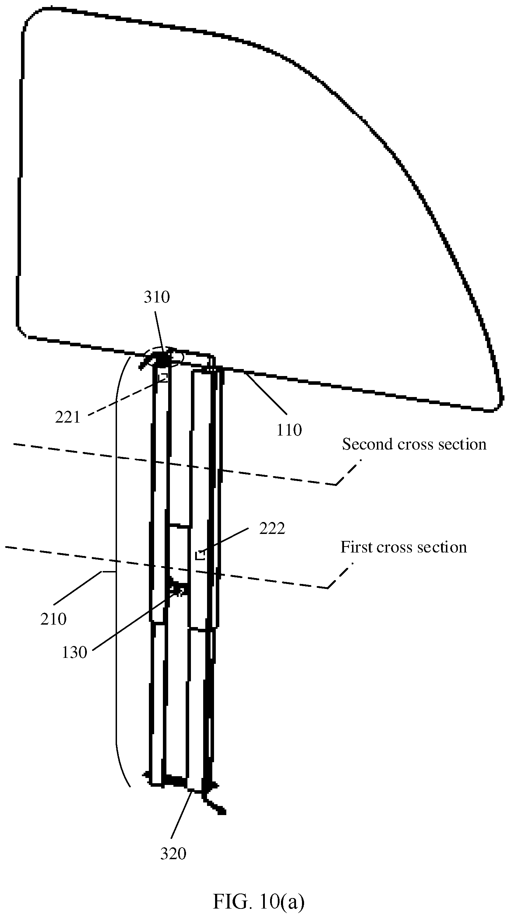

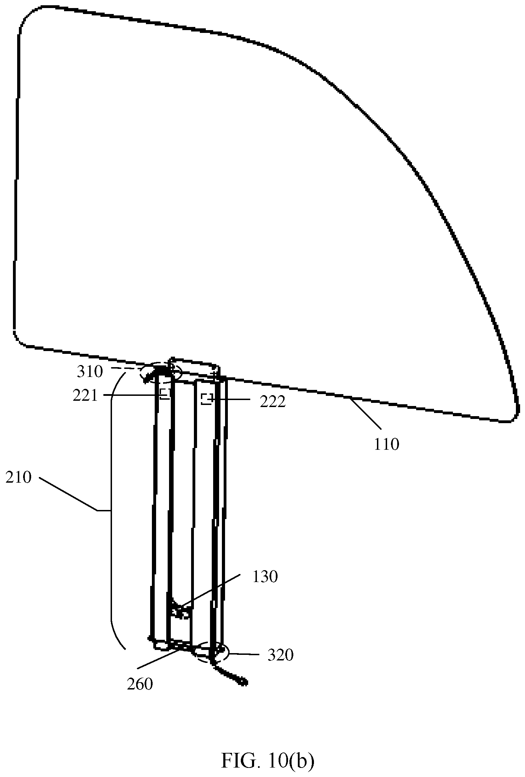

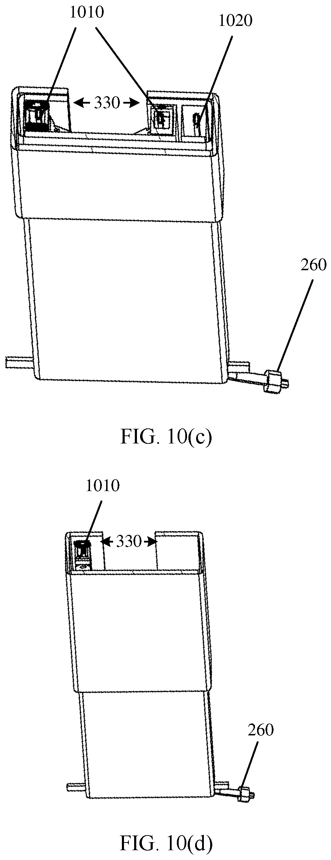

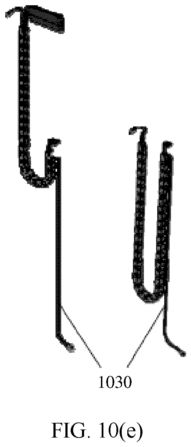

FIG. 10(a) to FIG. 10(e) are diagrams of a structure of another fastening apparatus 200 according to an embodiment of this application. FIG. 10(a) is a diagram of a structure obtained when the multi-stage telescopic member 210 is in an extending process. FIG. 10(b) is a diagram of a structure obtained when the multi-stage telescopic member 210 is retracted to be shortest. FIG. 10(c) is a sectional view of a first cross section in (a). FIG. 10(d) is a sectional view of a second cross section in (a). FIG. 10(e) is a diagram of a form of harness 130 disposed in the apparatus shown in FIG. 10(a) to FIG. 10(e). The multi-stage telescopic member 210 shown in FIG. 10(a) to FIG. 10(e) includes two stages of components.

Based on the fastening apparatus 200 provided in the foregoing embodiment, the harness 130 may be a drag chain harness, and the drag chain harness has good stability. A weight of the drag chain also plays a corresponding constraint role on the harness 130, so that the harness 130 is not likely to be tangled by itself.

Therefore, a first opening 330 may further be disposed on a surface of each stage of component provided in the foregoing embodiment. The surface may be a large surface of the component, and the large surface is a surface with a largest area in surfaces of the component. Due to a constraint function of the drag chain harness, generally, even if the first opening is provided on the surface of the component, the drag chain harness does not overflow from the first opening in a process of extending or retracting the drag chain harness.

The sectional view of the fastening apparatus 200 presented at the first cross section is shown in FIG. 10(c). A section of a part indicated by 1010 in the figure is a section that is of the drag chain harness and that is along the first cross section, where a left section of the drag chain harness is a section of the one end of the drag chain harness fastened to the top component 211, and a right section of the drag chain harness is a section of the other end of the drag chain harness fastened to the bottom component 212. In addition, the sectional view of the fastening apparatus 200 presented at the second cross section is shown in FIG. 10(d). A section of a part indicated by 1010 in the figure is a section that is of the drag chain harness and that is along the second cross section. However, because in the second cross section, the other end of the drag chain harness fastened to the bottom component 212 is not cut, only a section of the one end of the drag chain harness fastened to the top component 211 is presented in the diagram. In addition, it can be learned from FIG. 10(c) and FIG. 10(d) that the first openings 330 disposed on all the stages of components are disposed on surfaces in a same direction, or certainly, may be disposed on surfaces in alternate directions. This is not limited in this application.

Based on the foregoing technical solution, because the drag chain harness has a characteristic of constraining the harness, the drag chain harness is not likely to be tangled with another element due to overflowing from the first opening 330 on the surface. Further, the multi-stage telescopic member 210 is lightweight to some extent, so that the fastening apparatus 200 is lighter, and manufacturing costs are reduced.

In some possible embodiments, the at least one fastening point 220 includes a first fastening point 221 and a second fastening point 222. The first fastening point 221 may be disposed on an upper part of the top component 211, and the second fastening point 222 may be disposed on an upper part of the bottom component 212. When the multi-stage telescopic member 210 is retracted to be shortest, the first fastening point 221 and the second fastening point 222 may be located in space on a same plane perpendicular to an extended/retracted direction of the multi-stage telescopic member 210. In this case, the drag chain harness is fastened by the two fastening points. Therefore, a length of the drag chain harness can be adjusted, to enable the drag chain harness to distribute in a U shape.

Based on this technical solution, there is no drag chain harness stacked together in the bottom component 212, so that a case in which the harness 130 is tangled by itself can be effectively prevented.

Based on the fastening apparatus 200 provided in the foregoing embodiment, when the harness 130 is excessively long, a drag chain may be added to the harness 130 of a proper length, that is, a length of the harness 130 to which a drag chain needs to be added is determined based on a movement distance of the mobile apparatus 110 connected to the harness 130. As shown in FIG. 10(e), a drag chain is added to a part of the harness 130, and under a fastening function of the first fastening point 221 and the second fastening point 222, and under a self-weight effect of the drag chain, this part of the harness 130 is freely drooped with the drag chain. A left figure shows a state of the drag chain harness in the fastening apparatus 200 when the harness 130 is in a stretched state, and a right figure shows that the drag chain harness is in a U-shaped distribution state as a whole when the multi-stage telescopic member 210 is retracted to be shortest. For a redundant part of the harness 130, it can be learned from FIG. 10(c) and FIG. 10(d) that, a harness groove 1020 may further be provided below the second fastening point 222 of the bottom component 212, and the harness groove is connected to the second hole 320 of the bottom component 212, so that the redundant harness 130 can be accommodated in the harness groove, and is connected to the power supply apparatus 120 through the second hole 320. Based on the technical solution, a case in which the redundant harness 130 is tangled by itself in the multi-stage telescopic member 210 can be effectively prevented.

In some possible embodiments, the bottom component 212 of the multi-stage telescopic member 210 is connected to the support base 150 through the rotating shaft 260, or the top component 211 of the multi-stage telescopic member 210 is directly connected to the mobile apparatus 110 through the elastic connecting member 270. Based on the technical solution, the multi-stage telescopic member 210 can still be extended or retracted when the mobile apparatus 110 moves along the curve, to prevent a case in which the mobile apparatus 110 is stuck and the multi-stage telescopic member 210 is even damaged when the mobile apparatus 110 moves along a non-linear track.

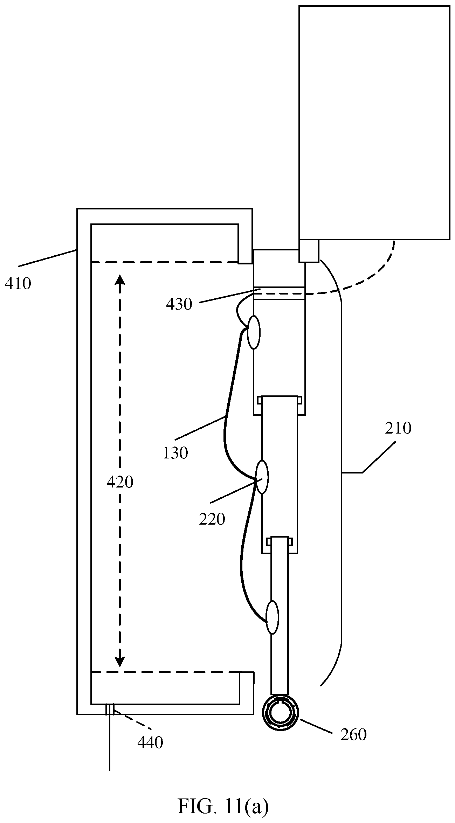

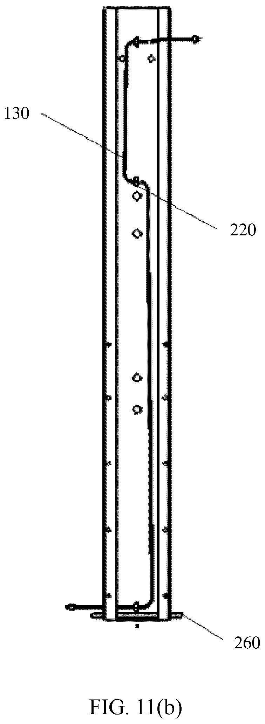

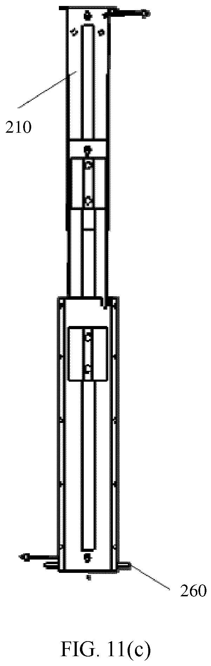

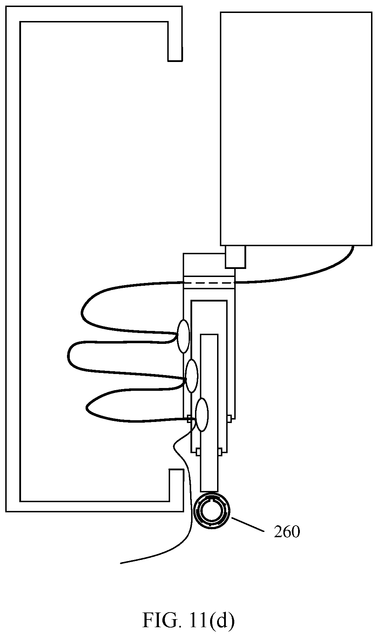

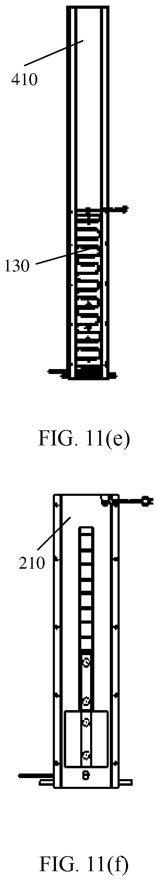

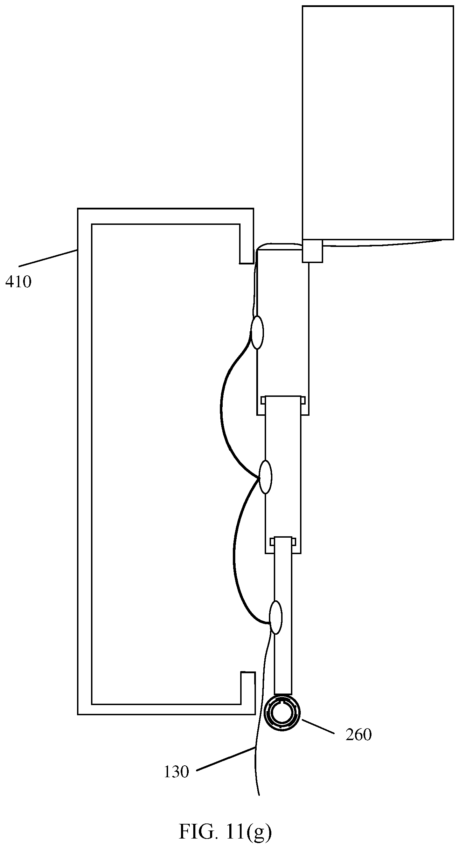

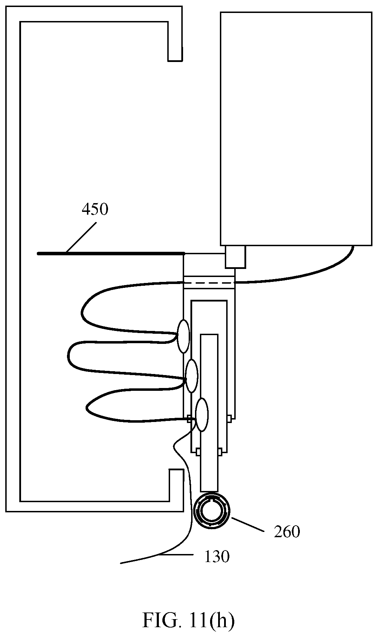

FIG. 11(a) to FIG. 11(h) are diagrams of a structure of another fastening apparatus 200 according to an embodiment of this application. FIG. 11(a) is a diagram of a structure obtained when the multi-stage telescopic member 210 is extended to be longest, and the diagram of a structure is a side cross-sectional view of the fastening apparatus 200. FIG. 11(b) is a front view obtained when the multi-stage telescopic member 210 is extended to be longest. FIG. 11(c) is a rear view obtained when the multi-stage telescopic member 210 is extended to be longest. FIG. 11(b) is a diagram of a structure obtained when the multi-stage telescopic member 210 is retracted to be shortest. FIG. 11(d) is a diagram of a structure obtained when the multi-stage telescopic member 210 is retracted to be shortest, and the diagram of a structure is a side cross-sectional view of the fastening apparatus 200. FIG. 11(e) is a front view obtained when the multi-stage telescopic member 210 is retracted to be shortest. FIG. 11(f) is a rear view obtained when the multi-stage telescopic member 210 is retracted to be shortest. FIG. 11(g) is a diagram of a structure obtained when the multi-stage telescopic member 210 is not connected to an accommodation portion 410. FIG. 11(h) is a diagram of a structure of the fastening apparatus 200 having a pressure plate 450 according to an embodiment of this application.

Different from the fastening apparatus 200 shown in FIG. 10(a) to FIG. 10(e), each stage of component of the multi-stage telescopic member 210 included in the fastening apparatus 200 provided in this embodiment is a baffle plate. In addition, the apparatus 200 further includes:
the accommodation portion 410, where one side of the accommodation portion 410 has a second opening 420, the second opening 420 is disposed opposite to the multi-stage telescopic member 210, and when the multi-stage telescopic member 210 is extended to be longest, a range of the second opening 420 covers all fastening points disposed on the multi-stage telescopic member 210.

In an embodiment, the accommodation portion 410 may be of a box-type structure, for example, may be a harness box having the second opening 420 on one side, and the one side having the second opening 420 may be a large surface of the accommodation portion 410, or may be a side surface of the accommodation portion 410. The side surface is a surface that is connected to the large surface and that is other than an upper end surface or a lower end surface of the accommodation portion 410.

Based on the foregoing technical solution, the accommodation portion 410 is configured to accommodate the harness 130 fastened to the multi-stage telescopic member 210, to further limit the movement range of the harness 130 when the harness 130 moves with the mobile apparatus 110. This can effectively avoid tangling between the harness 130 and another element, and also avoid an abnormal sound caused by beating between the harness 130 and another element.

In some possible embodiments, the accommodation portion 410 and the multi-stage telescopic member 210 may be fastened to the same support base 150, or the accommodation portion 410 may be fixedly connected to another base apparatus, provided that the range of the second opening 420 covers all the fastening points disposed on the multi-stage telescopic member 210, to prevent the harness 130 from being stuck in an interlayer between the accommodation portion 410 and the multi-stage telescopic member 210 when the harness 130 is extended or retracted with the multi-stage telescopic member 210. Therefore, on the premise that the foregoing conditions are met, a height of the accommodation portion 410 may be greater than a height of the multi-stage telescopic member 210 when the multi-stage telescopic member 210 is extended to be longest, or may be equal to the height of the multi-stage telescopic member 210 when the multi-stage telescopic member 210 is extended to be longest, or may be less than the height of the multi-stage telescopic member 210 when the multi-stage telescopic member 210 is extended to be longest.

In some possible embodiments, the multi-stage telescopic member 210 may be connected to the accommodation portion 410 through the rotating shaft 260, or the multi-stage telescopic member 210 is connected to the support base 150 through the rotating shaft 260, or the top component 211 of the multi-stage telescopic member 210 is directly connected to the mobile apparatus 110 through the elastic connecting member 270. The accommodation portion 410 and the multi-stage telescopic member 210 may alternatively be integrally formed. The integral formed apparatus may be connected to the support base 150 through the rotating shaft 260, or the top component 211 of the multi-stage telescopic member 210 in the integral formed apparatus is directly connected to the mobile apparatus 110 through the elastic connecting member 270.

Based on the technical solution, the multi-stage telescopic member 210 can still be extended or retracted when the mobile apparatus 110 moves along the curve, to prevent a case in which the mobile apparatus 110 is stuck and the multi-stage telescopic member 210 is even damaged when the mobile apparatus 110 moves along a non-linear track.

In some possible embodiments, as shown in FIG. 11(a) and FIG. 11(d), the fastening apparatus 200 further includes:
a third hole 430, where the third hole 430 is provided at an upper end of the accommodation portion 410 or the top component 211, and is configured to lead out the one end of the harness 130, where the one end may be connected to the mobile apparatus 110; and
a fourth hole 440, where the fourth hole 440 is disposed at a lower end of the accommodation portion 410 or the bottom component 212, and is configured to lead out the other end of the harness 130, where the end may be connected to the power supply apparatus 120.

Based on the foregoing technical solution, the mobile apparatus 110 can be continuously powered.

In some possible embodiments, as shown in FIG. 11(g), when the accommodation portion 410 and the multi-stage telescopic member 210 are two apparatuses independent of each other, a gap between the accommodation portion 410 and the multi-stage telescopic member 210 may be less than a diameter of the harness 130 and greater than a diameter of a lead led out from two ends of the harness 130, so that the lead led out from the two ends of the harness 130 can pass through the gap. In this way, the lead led out from the one end of the harness 130 is connected to the mobile apparatus 110, and the lead led out from the other end of the harness 130 is connected to the power supply apparatus 120.

Based on the foregoing technical solution, the mobile apparatus 110 can also be continuous powered. Because the accommodation portion 410 and the multi-stage telescopic member 210 are two apparatuses independent of each other, it is convenient for separate maintenance for the two apparatuses later, and no hole needs to be drilled on the fastening apparatus 200, which simplifies a processing process of the fastening apparatus 200.

FIG. 11(h) shows the fastening apparatus 200 having the pressure plate 450 according to an embodiment of this application. The fastening apparatus 200 further includes:
the pressure plate 450, where the pressure plate 450 is disposed on the top component 211, and the pressure plate 450 extends to an inside of the accommodation portion 410, to prevent the harness 130 from overflowing from the second opening 420 of the accommodation portion 410 in a retraction process of the multi-stage telescopic member 210.

In some possible embodiments, when a fastening point is disposed on the top component 211, the pressure plate 450 may be disposed above the fastening point of the top component 211. The pressure plate 450 may alternatively be directly disposed on the upper end surface of the top component 211. In addition, when no fastening point is disposed on the top component 211, and a fastening point is disposed on a lower stage of component of the top component 211, the pressure plate 450 may be disposed on the top component 211, or the pressure plate 450 may be disposed above the fastening point of the lower stage of component. This is not limited in this application.

Based on the foregoing technical solution, a phenomenon in which the harness 130 disorders in the accommodation portion 410 and overflows from the accommodation portion 410 in the retraction process, resulting in tangling between the harness 130 and another element can be effectively prevented.

As shown in FIG. 11(a), FIG. 11(b), and FIG. 11(c), in this case, the multi-stage telescopic member 210 is extended to be longest, and the harness 130 between the fastening points should be in a loose state. As shown in FIG. 11(d), FIG. 11(e), and FIG. 11(f), in this case, the multi-stage telescopic member 210 is retracted to be shortest, and the harness 130 is stacked in the accommodation portion 410 due to a constraint of the fastening point or the fastening point and the pressure plate 450, and does not overflow from the accommodation portion 410.

In an embodiment, the accommodation portion 410 and the slide rail of the mobile apparatus 110 may be integrally formed. Based on the technical solution, the accommodation portion 410 is used as a part of the slide rail, and space occupied by the apparatus is saved.

The harness 130 mentioned in the foregoing embodiments of this application may be a common harness, a drag chain harness, or a flat harness. Because the flat harness is likely to bend, and is likely to be in a form of stacking with each other after being bent, the flat harness is not likely to be tangled by itself in the process of moving with the mobile apparatus 110, and is not likely to be tangled with another element.

An embodiment of this application further provides a vehicle door, including any fastening apparatus 200 and mobile apparatus 110 provided in embodiments of this application.

In some possible embodiments, the mobile apparatus 110 included in the vehicle door is liftable vehicle door glass, and the liftable vehicle door glass is connected to the fastening apparatus 200. The liftable glass is connected to the fastening apparatus 200 through the elastic connecting member 270.

An embodiment of this application further provides a vehicle, including any fastening apparatus 200 provided in embodiments, or including the vehicle door.

An embodiment of this application further provides a device, including any fastening apparatus 200, mobile apparatus 110, and power supply apparatus 120 provided in embodiments of this application.

In some embodiments that may be implemented, the device may be a display, a television, a curtain, building glass, a roof skylight, or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A fastening apparatus (200), comprising:
a multi-stage telescopic member (210), wherein the multi-stage telescopic member (210) comprises a plurality of components that are slidably sleeved sequentially, a component located at the top is a top component (211), and the top component (211) is configured to connect to a mobile apparatus (110), so that the multi-stage telescopic member (210) is extended or retracted as the mobile apparatus (110) moves; and
at least one fastening point (220), wherein the at least one fastening point (220) is disposed on the multi-stage telescopic member (210), the at least one fastening point (220) is configured to fasten a harness (130), one end of the harness (130) is configured to connect to the mobile apparatus (110), and the other end of the harness (130) is configured to connect to a power supply apparatus (120), so that the power supply apparatus (120) supplies power to the mobile apparatus (110) through the harness (130).

2. The fastening apparatus (200) according to claim 1, wherein a component located at the bottom is a bottom component (212), the bottom component (212) is connected to a support base (150), and the fastening apparatus (200) further comprises:
a rotating shaft (260), wherein the rotating shaft (260) is disposed between the bottom component (212) and the support base (150), so that the multi-stage telescopic member (210) rotates along an axis of the rotating shaft (260).

3. The fastening apparatus (200) according to claim 1 or 2, wherein the fastening apparatus (200) further comprises:
an elastic connecting member (270), wherein the elastic connecting member (270) is disposed between the top component (211) and the mobile apparatus (110), so that the multi-stage telescopic member (210) is capable of being pulled to be extended or retracted when the mobile apparatus (110) moves.

4. The fastening apparatus (200) according to any one of claims 1 to 3, wherein a quantity of the at least one fastening point (220) is the same as a quantity of the components comprised in the multi-stage telescopic member (210), and one fastening point is disposed on each stage of component.

5. The fastening apparatus (200) according to any one of claims 1 to 4, wherein the component is of a hollow structure, and is configured to accommodate the harness (130).

6. The fastening apparatus (200) according to claim 5, wherein the fastening apparatus (200) further comprises:
a first hole (310), wherein the first hole (310) is provided on the top component (211), and is configured to lead out the one end of the harness (130); and
a second hole (320), wherein the second hole (320) is provided on the bottom component (212), and is configured to lead out the other end of the harness (130).

7. The fastening apparatus (200) according to claim 6, wherein the at least one fastening point (220) comprises a first fastening point (221) and a second fastening point (222), the first fastening point (221) is disposed on the top component (211), the second fastening point (222) is disposed on the bottom component (212), and when the multi-stage telescopic member (210) is retracted to be shortest, the harness (130) between the first fastening point (221) and the second fastening point (222) is distributed in a U shape.

8. The fastening apparatus (200) according to any one of claims 5 to 7, wherein the harness (130) is a drag chain harness.

9. The fastening apparatus (200) according to claim 8, wherein a first opening is provided on a surface of the component.

10. The fastening apparatus (200) according to any one of claims 1 to 4, wherein the component is a baffle plate, and the fastening apparatus (200) further comprises:
an accommodation portion (410), wherein one side of the accommodation portion (410) has a second opening (420), the second opening (420) is disposed opposite to the multi-stage telescopic member (210), and when the multi-stage telescopic member (210) is extended to be longest, a range of the second opening (420) covers all the at least one fastening point (220) disposed on the multi-stage telescopic member (210).

11. The fastening apparatus (200) according to claim 10, wherein a lower end of the second opening (420) is connected to the bottom component (212), and the fastening apparatus (200) further comprises:
a third hole (430), wherein the third hole (430) is provided at an upper end of the accommodation portion (410) or the top component (211), and is configured to lead out the one end of the harness (130); and
a fourth hole (440), wherein the fourth hole (440) is provided at a lower end of the accommodation portion (410) or the bottom component (212), and is configured to lead out the other end of the harness (130).

12. The fastening apparatus (200) according to claim 10 or 11, wherein the fastening apparatus (200) further comprises:
a pressure plate (450), wherein the pressure plate (450) is disposed on the top component (211) and extends to an inside of the accommodation portion (410), to prevent the harness (130) from overflowing from the second opening (420) in a process of retracting the multi-stage telescopic member (210).

13. The fastening apparatus (200) according to any one of claims 10 to 12, wherein the accommodation portion (410) and a slide rail of the mobile apparatus (110) are integrally formed.

14. The fastening apparatus (200) according to any one of claims 1 to 7, and 10 to 13, wherein the harness (130) is a flat harness.

15. A vehicle door, comprising the fastening apparatus (200) and the mobile apparatus (110) according to any one of claims 1 to 14.

16. The vehicle door according to claim 15, wherein the mobile apparatus (110) is liftable vehicle door glass, and the liftable vehicle door glass is connected to the fastening apparatus (200).

17. The vehicle door according to claim 16, wherein that the liftable vehicle door glass is connected to the fastening apparatus (200) comprises:
the liftable vehicle door glass is connected to the fastening apparatus (200) through an elastic connecting member (270).

18. A vehicle, comprising the fastening apparatus (200) according to any one of claims 1 to 14, or comprising the vehicle door according to any one of claims 15 to 17.

19. A device, comprising the fastening apparatus (200) according to any one of claims 1 to 14.
